# EUROPEAN PATENT SPECIFICATION

(11) **EP 1 970 879 B1**
(45) Date of publication and mention of the grant of the patent: **25.03.2009**
(21) Application number: 07113315.1
(22) Date of filing: 27.07.2007
(51) Int. Cl.: G09F 3/00

(54) **Disk labeling structure**
Plattenetikettierungsstruktur
Structure d'étiquetage de disque

(30) Priority: 14.03.2007 DE 202007003991 U
(43) Date of publication of application: 17.09.2008
(73) Proprietor: HONG, Shu-Chi, Taipei City, Taiwan (TW)
(72) Inventor: HONG, Shu-Chi, Taipei City, Taiwan (TW)
(74) Representative: 2K Patentanwälte Blasberg Kewitz & Reichel

(56) References cited:
- US-A- 1 489 147
- US-A- 2 535 262
- US-A- 4 232 461
- US-A1- 2005 144 826
- US-B1- 7 010 876

## Description

### FIELD OF THE INVENTION

The present invention is related to a disk labeling structure, and more particularly to a disk labeling structure which is not coming off easily.

### BACKGROUND OF THE INVENTION

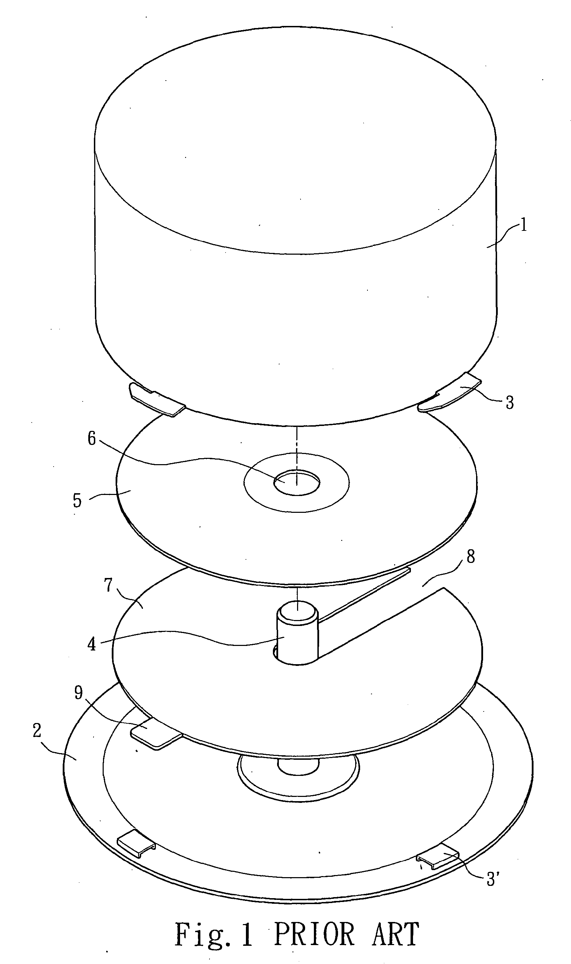

In the market, compact disks or date storage disks, such as CD, VCD and DVD, are usually used for storing a great quantity of information owing to the small volume, convenient mobility and low cost thereof. Currently, there are several methods for accommodating the disk, which are mono-piece accommodation and multi-pieces accommodation. The mono-piece accommodation may utilize a hard case, a plastic sleeve with cotton protection or a paper sleeve, and the multi-pieces accommodation is always achieved by collecting plural mono-piece sleeves in a collection case. However, the collection case must cooperate with mono-piece sleeves which might reduce the accommodation space and also increase the unnecessary weight. Now, a disk container (so called caddy), as shown in Fig. 1, is used. The disk container includes an upper cover 1 and a lower base 2, wherein plural corresponding engaging components 3, 3' are respectively mounted on the upper cover 1 and the lower base 2, and the lower base 2 has a pillar 4 mounted at the center thereof for penetrating the central holes 6 of the disk 5. Because the disk container does not need to cooperate with other structures for accommodating a great amount of disks 5, the space can be utilized in an adequate manner. However, if there is the need to take out a required disk 5 out of the stack of disks, one has to view the mark labeled on the disk 5 piece by piece which is really inconvenient. Conventionally, a disk label is used for classifying and dividing the disks 5 stored in the convention disk container, as shown in Fig. 1. The disk label has a disk-shaped main body 7, an opening 8 extended from the center thereof to the edge for receiving the pillar 4 of the disk container, and a labeling portion 9, which is integrally formed with the main body 7 and located at the edge of the main body 7 for placing the classification mark. The disks in different classifications can be separated by the disk label, so that the required disk can be easily taken out according to the mark on the labeling portion 9. However, since the labeling portion 9 is integrally formed with the main body 7 in the same plane, the upper cover 1 might not be engaged with the lower base 2 if the internal diameter of the upper cover 1 is not big enough. If the disk container can not be covered by the upper cover 1, the disk label might be easily coming off the pillar 4 or get lost owing to shaking or tilting.

### SUMMARY OF THE INVENTION

Therefore, the object of the present invention is to provide a disk labeling structure for facilitating the division and labeling of the stacked disks, ensuring the engagement between the upper cover and the lower base of the disk container, and avoiding from coming off during shaking or tilting.

The present invention provides a disk labeling structure as defined by claim 1.The disk labeling structure includes a fixing portion configured to be engaged with the pillar, a labeling portion for placing mark thereon so as to facilitate classification, and an extending portion for connecting the fixing portion and the labeling portion. The fixing portion, the labeling portion and the extending portion are integrally formed, the fixing portion and the extending portion are formed to locate on the same plane, and the labeling portion is perpendicular to the plane by connecting with the extending portion in an L shape, or a T shape. The fixing portion has an opening or cut-out outwardly extended from the center thereof for accommodating the pillar, and the angle between the direction of the opening and the direction from the center of the fixing portion to the labeling portion is less than 90°. Therefore, if it becomes necessary to take out the disk labeling structure hooked on the pillar, one has to move backward the labeling structure along the opening, so that the disk labeling structure will not come off easily.

According to another embodiment, the fixing portion has a first protrusion ring or indent ring mounted thereon and located at a position contacting a circular protrusion on the disk, and the diameter of the first protrusion ring or indent ring is identical to that of the circular protrusion.

According to another embodiment, the fixing portion, at the opposite side, has a second protrusion ring at a position corresponding to the first protrusion ring or indent ring. The installation of the protrusion ring or indent ring can increase the division space between the disks or slightly immobilize the disk contacted therewith.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a schematic view showing the appearance of a disk container with a disk label in the prior art;
Fig. 2 is a schematic view showing the appearance of a disk labeling structure according to the present invention;
Fig. 3 is a schematic view showing the appearance of a disk labeling structure in a second embodiment according to the present invention;
Fig. 4 is a schematic view showing the usage of a disk labeling structure according to the present invention;
Fig. 5 is a sectional drawing showing the 5-5 section of a disk labeling structure according to the present invention;
Fig. 6 is a sectional drawing showing the 5-5 section of a disk labeling structure in a third embodiment according to the present invention;
Fig. 7 is a schematic view showing the appearance of a disk labeling structure with a curved shape of extending portion according to the present invention;
Fig. 8 is a sectional drawing showing the 5-5 section of a disk labeling structure with a smaller diameter of the first protrusion ring according to the present invention;
Fig. 9 is a schematic view showing the appearance of a disk labeling structure in a second embodiment mounted the protrusion rings according to the present invention; and
Fig. 10 is a schematic view showing the appearance of a disk labeling structure in the embodiment as Fig. 7 mounted the protrusion rings according to the present invention.

### DESCRIPTION OF THE PREFERRED EMBODIMENT

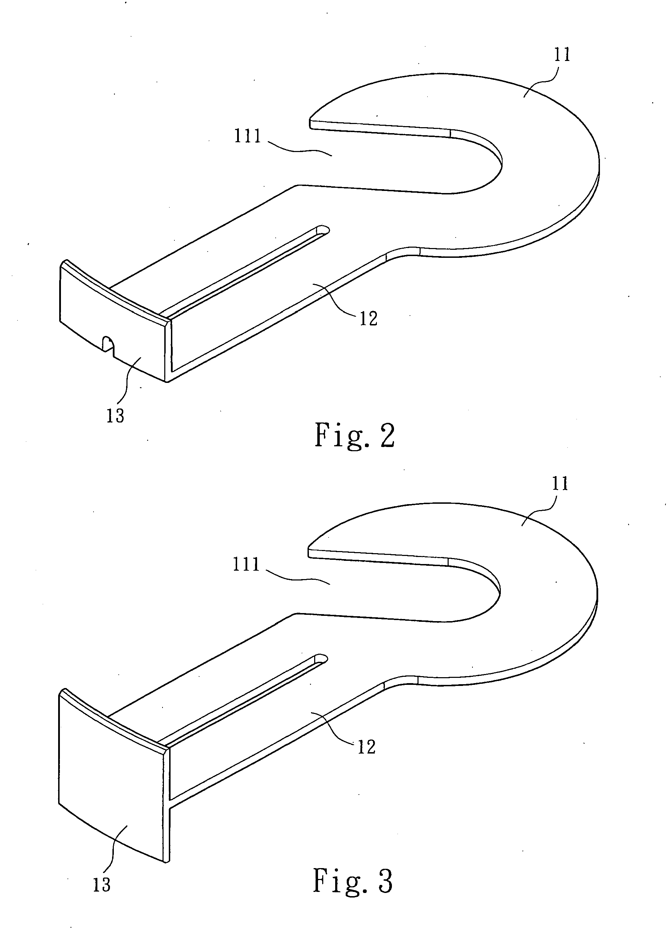

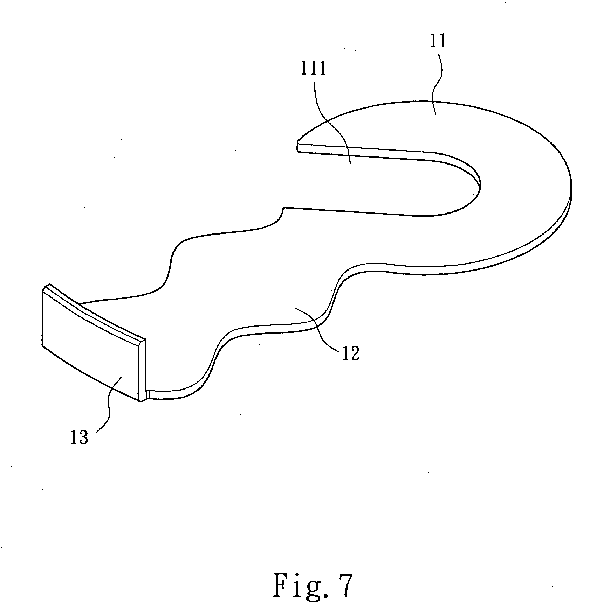

Please refer to Fig. 2 and Fig. 3, which are respectively the schematic views showing the appearances of different embodiments according to the present invention. The disk labeling structure according to the present invention is used to separate and label a plurality of disks or disk-shaped data storage media (not shown), which are stacked one upon the other and enclosed by a disk container (not shown). The disk labeling structure includes a fixing portion 11 for locating on the disk container, a labeling portion 13 which is formed as a flat surface for placing the mark, and between the fixing portion 11 and the labeling portion 13, an extending portion 12 for connection, wherein the fixing portion 11, the extending portion 12 and the labeling portion 13 are integrally formed. The fixing portion 11 has an opening or cut-out 111, which is outwardly extended from the center thereof and configured to engage with the pillar of the disk container (not shown) in order to fix the position of the disk labeling structure, and the length from the center to the inner edge of the labeling portion 13 should be at least larger than the radius of the disk, more exactly, the inner edge of the labeling portion 13 should be just rejected at the outer edge of the disk. Furthermore, the fixing portion 11 and the extending portion 12 are formed to be located on the same plane and the labeling portion 13 is perpendicular to the plane. Here, the labeling portion 13 and the extending portion 12 can be connected in the way that they are in an L shape (as shown in Fig. 2), or a T shape (as shown in Fig. 3). Otherwise, the shape of the extending portion 12 could be a straight form (as shown in Fig. 2 and Fig. 3), or a curved form (as shown in Fig. 7).

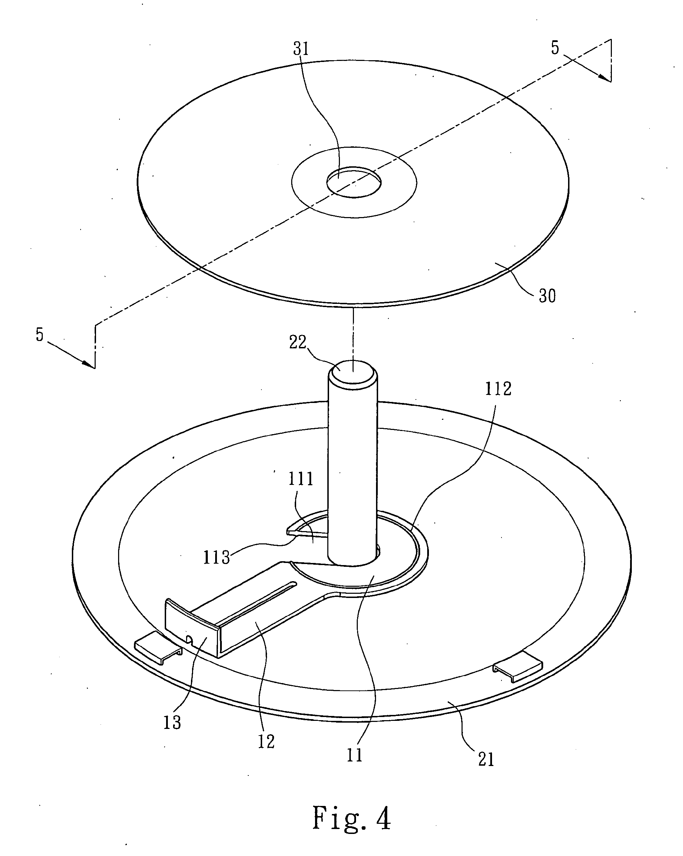

Please refer to Fig. 4, which is a schematic view showing the usage of the disk labeling structure according to the present invention which is cooperated with the disk container. The disk container includes a base 21 and a cover (not shown), wherein the base 21 has a pillar 22 upwardly extended from the center thereof for penetrating the hole 31 of the disk 30 so that a plurality of disks 30 can be stacked one upon the other. The fixing portion 11 of the disk labeling structure can engage with the pillar 22 through the opening 111 since the direction of the opening 111 is not parallel to the direction from the center of the fixing portion to the labeling portion 13, and further, the included angle between the two directions is lees than 90°. And, since the fixing portion 11 of the disk labeling structure has a hook shape, for removing, the disk labeling structure has to be moved along the direction of the opening 111, so that in comparison to the prior art the disk labeling structure according to the present invention truly can avoid the situation of easily coming off the disk container if the disk container is shaken or tilted which may lose the classification of the disks 30.

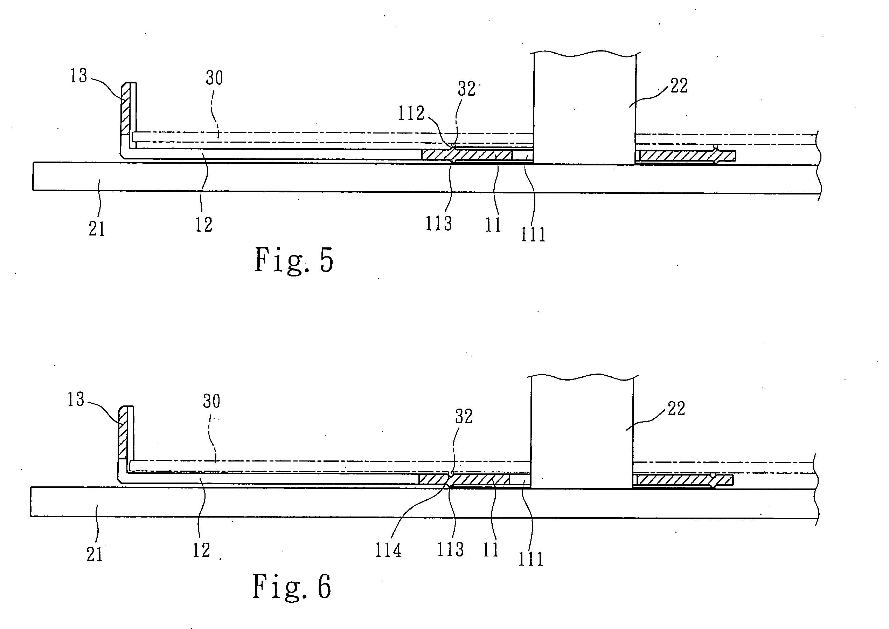

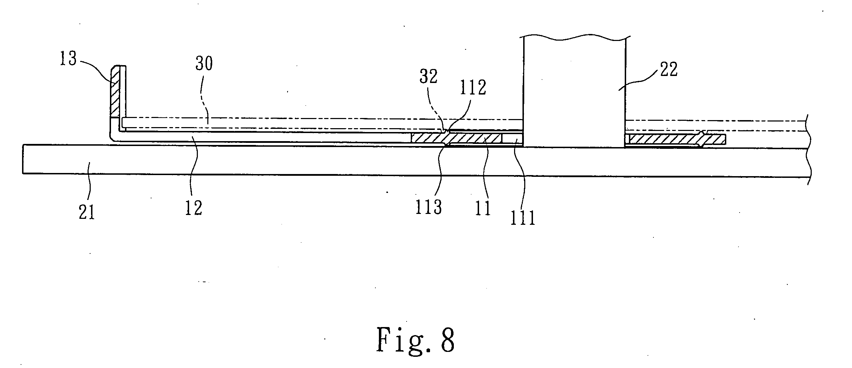

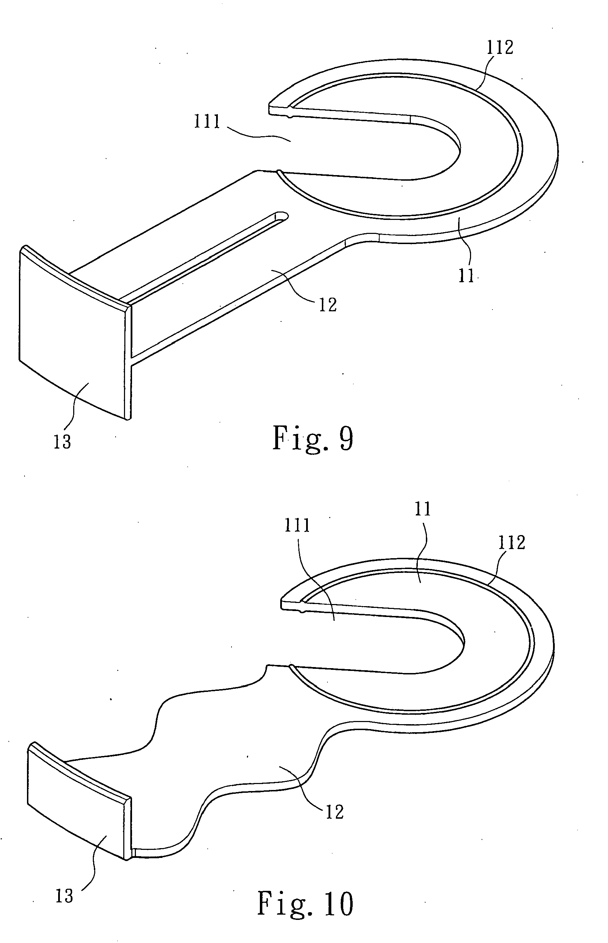

Fig. 5 shows the 5-5 section of Fig. 4. As shown, generally, the disk 30 has a circular protrusion 32 located the back side thereof, and at the corresponding position, the fixing portion 11 of the disk labeling structure according to a third embodiment of the present invention has mounted a first protrusion ring 112 for contacting the circular protrusion 32, and at the opposite side of the fixing portion 11, a second protrusion ring 113 is also mounted at the position corresponding to the first protrusion ring 112. Here, alternatively, the first protrusion ring 112 also can be replaced by an indent ring 114, as shown in Fig. 6, whose diameter is identical to that of the circular protrusion 32. In addition, as shown in Fig. 8, the diameter of the first protrusion ring 112 is smaller than that of the circular protrusion 32. And the embodiments with different shapes described above have mounted the protrusion rings 112, 113 as well (as shown Fig. 9 and Fig. 10). Through the first and the second protrusion rings 112, 113 mounted at both sides of the fixing portion 11, a space between the disk 30 and the disk labeling structure can be produced for facilitating the division and also avoiding the scrape on the disk surface. As the other situation of the fixing portion 11 having the second protrusion ring 113 and the indent ring 114 at the both sides, the indent ring 114 can be engaged with the circular protrusion 32 so as to slightly immobilize the disk labeling structure with the upper disk 30.

In the aforesaid, the disk labeling structure according to the present invention utilizes an opening or cut-out 111 on the fixing portion 11 thereof to hook the pillar 22 in the disk container for being inserted into the stacked disks 30, and the labeling portion 13 can place the mark for classifying. Since the included angle between the direction of the opening 111 of the fixing portion 11 and the direction of the extended portion 12 is less than 90°, as the disk container shakes or tilts, the disk labeling structure might not come off the pillar to lose the classification of the stacked disks 30.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention as defined by the appended claims.

## Claims

1. A disk labeling structure for dividing and/or labeling a plurality of disks or disk-shaped data recording media (3), which are stacked one upon the other by a pillar (22), **characterized by**:
a fixing portion (11) configured to be engaged with the pillar (22), a labeling portion (13), and an extending portion (12) for connecting the fixing portion (11) and the labeling portion (13), wherein
the fixing portion (11) has an opening (111) outwardly extended from the center thereof for accommodating the pillar (22),
the fixing portion (11) and the extending portion (12) are formed to be located on a same plane,
the labeling portion (13) is perpendicular to the plane, and
the direction of the opening (111) is not parallel to the direction from the center of the fixing portion (11) to the labeling portion (13).

2. The disk labeling structure as claimed in claim 1, wherein the fixing portion (11) has a first protrusion ring (112) mounted thereon and located at a position contacting a circular protrusion (32) on the disk (3), and the diameter of the first protrusion ring (112) is identical to that of the circular protrusion (32).

3. The disk labeling structure as claimed in claim 2, wherein the fixing portion (11), at the opposite side, has a second protrusion ring (113) at a position corresponding to the first protrusion ring (112).

4. The disk labeling structure as claimed in claim 1, wherein the fixing portion (11) has a first protrusion ring (112) mounted thereon and located, when in use, at a position contacting a circular protrusion (32) on the disk(3), and the diameter of the first protrusion ring (112) is smaller than that of the circular protrusion (32).

5. The disk labeling structure as claimed in claim 4, wherein the fixing portion (11), at the opposite side, has a second protrusion ring (113) at a position corresponding to the first protrusion ring(112).

6. The disk labeling structure as claimed in any of the preceding claims, wherein the fixing portion (11) has an indent ring (114) mounted thereon and located, when in use, at a position contacting a circular protrusion (32) on the disk (4), and the diameter of the indent ring (114) is identical to that of the circular protrusion (32).

7. The disk labeling structure as claimed in clam 6, wherein the fixing portion (11), at the opposite side, has a second protrusion ring (113) at a position corresponding to the indent ring (114).

8. The disk labeling structure as claimed in any of the preceding claims, wherein the angle between the direction of the opening (111) and the direction of the extending portion (12) is less than 90°.

9. The disk labeling structure as claimed in any of the preceding claims, wherein the fixing portion (11), the labeling portion (13) and the extending portion (12) are integrally formed.

10. The disk labeling structure as claimed in any of the preceding claims, wherein the length from the center of the fixing portion (11) to the labeling portion (13) is at least larger than the radius of the disk (3), when in use.

11. The disk labeling structure as claimed in any of the preceding claims, wherein the labeling portion (13) and the extending portion (12) are connected in an L shape.

12. The disk labeling structure as claimed in any of claims 1 to 10, wherein the labeling portion (13) and the extending portion (12) are connected in a T shape.

## Patentansprüche

1. Plattenkennzeichnungsstruktur zur Trennung und/oder Kennzeichnung einer Mehrzahl von Platten bzw. Scheiben oder scheibenförmigen Datenaufzeichnungsmedien (3), die mittels eines Zapfens (22) aufeinander gestapelt angeordnet sind, **gekennzeichnet durch**:
einen Befestigungsabschnitt (11), der für einen Eingriff mit dem Zapfen (22) ausgelegt ist, einen Kennzeichnungsabschnitt (13) und einen Verbindungsabschnitt (12) zum Verbinden des Befestigungsabschnittes (11) mit dem Kennzeichnungsabschnitt (13), wobei
der Befestigungsabschnitt (11) eine Öffnung (111) aufweist, die sich ausgehend von deren Mitte nach außen hin erstreckt, um den Zapfen (22) aufzunehmen,
der Befestigungsabschnitt (11) und der Verbindungsabschnitt (12) so ausgebildet sind, dass diese sich in derselben Ebene befinden,
der Kennzeiehnungsabschnitt (13) senkrecht zu der Ebene ist und
die Richtung der Öffnung (111) nicht parallel zu der Richtung von der Mitte des Befestigungsabschnittes (11) zu dem Kennzeichnungsabschnitt (13) ist.

2. Plattenkennzeichnungsstruktur nach Anspruch 1, wobei der Befestigungsabschnitt (11) einen ersten Ringvorsprung (112) aufweist, der darauf angebracht ist und sich an einer Position befindet, so dass dieser einen Ringvorsprung (32) auf der Scheibe (3) berührt, und wobei der Durchmesser des ersten Ringvorsprungs (112) identisch zu denjenigen des kreisförmigen Vorsprungs (32) ist.

3. Plattenkennzeichnungsstruktur nach Anspruch 2, wobei der Befestigungsabschnitt (11) auf seiner gegenüber liegenden Seite einen zweiten Ringvorsprung (113) an einer Position aufweist, die dem ersten Ringvorsprung (112) entspricht.

4. Plattenkennzeiehnungsstruktur nach Anspruch 1, wobei der Befestigungsabschnitt (11) einen ersten Ringvorsprung (112) aufweist, der darauf angebracht ist und sich im Einsatz an einer Stelle befindet, so dass dieser einen kreisförmigen Vorsprung (32) auf der Scheibe (3) berührt und wobei der Durchmesser des ersten Ringvorsprungs (112) kleiner ist als derjenige des kreisförmigen Vorsprungs (32).

5. Plattenkennzeichnungsstruktur nach Anspruch 4, wobei der Befestigungsabschnitt (11) auf seiner gegenüber liegenden Seite einen zweiten Ringvorsprung (113) an einer Position aufweist, die dem ersten Ringvorsprung (112) entspricht.

6. Plattenkennzeichnungsstruktur nach einem der vorhergehenden Ansprüche, wobei der Befestigungsabschnitt (11) eine Ringvertiefung (114) aufweist, die darauf angebracht ist und sich im Einsatz an einer Position befindet, so dass dieser einen kreisförmigen Vorsprung (32) auf der Scheibe (4) berührt und wobei der Durchmesser der Ringvertiefung (114) identisch zu denjenigen des kreisförmigen Vorsprungs (32) ist.

7. Plattenkennzeiehnungsstruktur nach Anspruch 6, wobei der Befestigungsabschnitt (11) auf der gegenüber liegenden Seite einen zweiten Ringvorsprung (113) an einer Position, die der Ringvertiefung (114) entspricht, aufweist.

8. Plattenkennzeichnungsstruktur nach einem der vorhergehenden Ansprüche, wobei der Winkel zwischen der Richtung der Öffnung (111) und der Richtung des Verbindungsabschnittes (12) kleiner als 90 Grad ist.

9. Plattenkennzeichnungsstruktur nach einem der vorhergehenden Ansprüche, wobei der Befestigungsabschnitt (11), der Kennzeichnungsabschnitt (13) und der Verbindungsabschnitt (12) einstückig ausgebildet sind.

10. Plattenkennzeichnungsstruktur nach einem der vorhergehenden Ansprüche, wobei die Strecke ausgehend von der Mitte des Befestigungsabschnittes (11) zu dem Kennzeichnungsabschnitt (13) zumindest größer als der Radius der Scheibe (3) ist, wenn diese verwendet wird.

11. Plattenkennzeichnungsstruktur nach einem der vorhergehenden Ansprüche, wobei der Kennzeichnungsabsdnitt (13) und der Verbindungsabschnitt (12) L-förmig miteinander verbunden sind.

12. Dattenkennzeiehnungsstruktur nach einem der Ansprüche 1 bis 10, wobei der Kennzeichnungsabschnitt (13) und der Verbindungsabschnitt (12) T-förmig miteinander verbunden sind.

## Revendications

1. Une structure d'étiquetage de disque pour diviser et/ou étiqueter une pluralité de disques ou de médias d'enregistrement de données sous forme de disques (3), qui sont empilés les uns sur les autres sur une colonne (22), **caractérisée par** :
- une partie de fixation (11) disposée de manière à agripper la colonne (22), une partie d'étiquetage (13), et une partie d'allonge (12) permettant de relier la partie de fixation (11) à la partie d'étiquetage (13) , dans laquelle
- la partie de fixation (11) présente une ouverture (111) s'étendant du centre vers l'extérieur pour recevoir la colonne (22) ;
- la partie de fixation (11) et la partie d'allonge (12) sont formées de manières à être disposées dans un même plan ;
- la partie d'étiquetage (18) est perpendiculaire au plan ;
- la direction de l'ouverture (111) n'est pas parallèle à l'axe passant par le centre de la partie de fixation (11) et la partie d'étiquetage (13).

2. La structure d'étiquetage de disque revendiquée dans la revendication 1 , dans laquelle la partie de fixation (11) présente un premier anneau en saillie (112) monté sur celui-ci et disposé à un emplacement de contact avec une protubérance circulaire (32) sur le disque (3), et le diamètre du premier anneau en saillie (112) étant identique à celui de la protubérance circulaire (32).

3. La structure d'étiquetage de disque revendiquée dans la revendication 2, dans laquelle la partie de fixation (11) a, sur un côté opposé, un second anneau en saillie (113) à un emplacement correspondant au premier anneau en saillie (112).

4. La structure d'étiquetage de disque revendiquée dans la revendication 1, dans laquelle la partie de fixation (11) présente un premier anneau en saillie (112) monté sur celui-ci et disposé, lors de son utilisation, à un emplacement de contact avec une protubérance circulaire (32) sur le disque (3), et le diamètre du premier anneau en saillie (112) étant plus faible que celui de la protubérance circulaire (32).

5. La structure d'étiquetage de disque revendiquée dans la revendication 4, dans laquelle la partie de fixation (11) a, sur un côté opposé, un second anneau en saillie (113) à un emplacement correspondant au premier anneau en saillie (112).

6. La structure d'étiquetage de disque revendiquée dans l'une quelconque des revendications précédentes, dans laquelle la partie de fixation (11) présente un anneau denté (114) monté sur celui-ci et disposé, lors de son utilisation, à une position de contact avec une protubérance circulaire (32) du disque (4), et le diamètre de l'anneau denté (114) étant identique à la protubérance circulaire (32).

7. La structure d'étiquetage de disque revendiquée dans la revendication 6, dans laquelle la partie de fixation (11) a, sur un côté opposé, un second anneau en saillie (113) à un emplacement correspondant à l'anneau denté (114).

8. La structure d'étiquetage de disque revendiquée dans l'une quelconque des revendications précédentes, dans laquelle l'angle entre la direction de l'ouverture (111) et celle de la partie allonge (12) a une valeur inférieure à 90 degrés.

9. La structure d'étiquetage de disque revendiquée dans l'une quelconque des revendications précédentes dans laquelle la partie de fixation (11), la partie d'étiquetage (13) et la partie allonge (12) viennent d'une même fabrication.

10. La structure d'étiquetage de disque revendiquée dans l'une quelconque des revendications précédentes dans laquelle, en utilisation, la distance du centre de la partie de fixation (11) à la partie d'étiquetage (13) est supérieure au moins au rayon des disques.

11. La structure d'étiquetage de disque revendiquée dans l'une quelconque des revendications précédentes dans laquelle la partie d'étiquetage (13) et la partie allonge (12) sont reliées suivant une forme de L.

12. La structure d'étiquetage de disque revendiquée dans l'une quelconque des revendications 1 à 10 dans laquelle la partie d'étiquetage (13) et la partie allonge
